# EUROPÄISCHE PATENTSCHRIFT

(11) **EP 3 251 491 B1**
(45) Veröffentlichungstag und Bekanntmachung des Hinweises auf die Patenterteilung: **16.06.2021**
(21) Anmeldenummer: 17159480.7
(22) Anmeldetag: 07.03.2017
(51) Int. Cl.: A01F 12/26

(54) **KORBSEGMENT ZUR ERNTEGUTABSCHEIDUNG**
BASKET SEGMENT FOR CROP DEPOSITION
SEGMENT DE CORBEILLE DESTINÉ À LA SÉPARATION DE RÉCOLTE

(30) Priorität: 03.06.2016 DE 102016110267
(43) Veröffentlichungstag der Anmeldung: 06.12.2017
(73) Patentinhaber: CLAAS Selbstfahrende Erntemaschinen GmbH, 33428 Harsewinkel (DE)
(72) Erfinder: Bußmann, Jens, 49179 Ostercappeln (DE); Holtmann, Bernd, 48324 Sendenhorst (DE)
(74) Vertreter: CLAAS Gruppe

(56) Entgegenhaltungen:
- EP-A1- 1 163 835
- EP-A1- 2 594 126
- EP-B2- 0 281 383
- US-A1- 2014 087 793
- US-A1- 2015 250 101

## Beschreibung

Die vorliegende Erfindung betrifft ein Korbsegment für einen Mähdrescher, das zum Abscheiden von Erntegut vorgesehen ist, sich in eine Umfangsrichtung bogenförmig um eine Korbachse erstreckt, und mehrere Fingerleisten umfasst, wobei die Fingerleisten jeweils eine Querleiste aufweisen, wobei sich die Querleisten jeweils in einer Erstreckungsrichtung parallel zur Korbachse erstrecken, und wobei an den Querleisten jeweils mehrere Finger angeordnet sind. Die vorliegende Erfindung betrifft weiterhin einen Korb mit solchen Korbsegmenten und einen Mähdrescher mit solchen Korbsegmenten.

Erntegut kann ein Dreschwerk und/oder eine Abscheidevorrichtung für einen Mähdrescher axial oder tangential durchströmen. In Abhängigkeit von der Erntegutströmungsrichtung können somit verschiedene Vorrichtungstypen und Mähdreschertypen unterschieden werden. Tangentialmähdrescher und Hybridmähdrescher weisen ein tangentiales Dreschwerk auf. Zudem umfassen Hybridmähdrescher mindestens eine axiale Abscheidevorrichtung. Axialflussmähdrescher weisen hingegen eine axiale Abscheidevorrichtung auf, die zusätzlich einen Dreschabschnitt aufweist. Axialmähdrescher weisen somit kein baulich separiertes Dreschwerk auf.

Tangentiale Dreschwerke umfassen Dreschkörbe und axiale Abscheidevorrichtungen umfassen Abscheidekörbe. Die Körbe der Dreschwerke und der Abscheidevorrichtungen weisen Durchtrittsöffnungen auf. Diese werden häufig aus kammartigen Fingerleisten gebildet, die auf einem Rahmen angebracht sind und zusammen mit den Fingerleisten ein austauschbares Korbsegment bilden. Dies hat den Vorteil, dass bei Abnutzung der Fingerleisten diese leicht ausgetauscht werden können. Zudem können durch Wechsel auf Fingerleisten mit veränderten Dimensionen die Durchtrittsöffnungen des Abscheidekorbes verändert und an die jeweilige Erntegutart angepasst werden.

Die Druckschrift EP 2 594 126 A1 offenbart dazu Fingerleisten eines Abscheidekorbes, welche fluchtend am Rahmen eines Korbsegmentes befestigt sind. Die Finger der Fingerleisten weisen ein offenes Ende auf, das sich frei in den Raum erstreckt. Zudem können an den Fingerleisten zur Erhöhung der Abscheideleistung Prallleisten befestigt sein.

Die Prallleisten können formschlüssig an den Fingerleisten anliegen, mit ihnen abschließen oder über die Fingerleisten in Richtung Rotorachse hinausragen.

Die Druckschrift EP 0 281 383 B2 offenbart Fingerleisten eines Abscheidekorbes, dessen Finger versetzt angeordnet sind. Die offenen Enden der Finger der Fingerleisten erstrecken sich ebenfalls frei in den Raum. Zudem weisen die Fingerleisten eine T-artige Struktur auf, wobei eine Stirnseite eines Schenkels der Fingerleiste als Prallfläche fungiert.

Es hat sich gezeigt, dass die Fingerleisten der Abscheidekörbe und insbesondere ihre frei im Raum endenden Finger große Materialstärken aufweisen müssen, um den auf sie wirkenden Kräften und Belastungen beim Abscheideprozess zu widerstehen. Eine hohe Materialstärke führt jedoch zu hohem Gewicht und zu großen Biegeradien.

Zudem ist aus US 2014/0087793 eine Korbstruktur bekannt geworden, welche neben sich in Gutflussrichtung erstreckenden Fingern senkrecht stehende, teilweise in den Gutfluss hineinragende Finger umfasst.

Aufgabe der Erfindung ist es, ein verbessertes Korbsegment für die Erntegutabscheidung zu schaffen, dessen Fingerleisten bei geringerer Materialstärke eine gleiche oder verbesserte Stabilität aufweisen und das kostengünstig herstellbar ist. Des Weiteren ist es Aufgabe der Erfindung, einen Korb mit solchen Korbsegmenten und einen Mähdrescher mit solchen Korbsegmenten zu schaffen.

Die Aufgabe wird gelöst mit einem Korbsegment mit den Merkmalen des unabhängigen Patentanspruchs 1, mit einem Korb mit den Merkmalen des unabhängigen Anspruchs 10 sowie mit einem Mähdrescher mit den Merkmalen des unabhängigen Patentanspruchs 12. Vorteilhafte Ausführungsformen sind den abhängigen Ansprüchen entnehmbar.

Dafür wird ein Korbsegment für einen Mähdrescher geschaffen, das zum Abscheiden von Erntegut vorgesehen ist. Das Korbsegment erstreckt sich in eine Umfangsrichtung bogenförmig um eine Korbachse und umfasst mehrere Fingerleisten. Die Fingerleisten weisen jeweils eine Querleiste auf, wobei sich die Querleisten jeweils in einer Erstreckungsrichtung parallel zur Korbachse erstrecken. An den Querleisten sind jeweils mehrere Finger angeordnet.

Die Abscheidung von Erntegut ist eine Trennung von Korn und Nicht-Kornbestandteilen, insbesondere Spreu und Stroh, des Erntegutes voneinander. Die Abscheidung mittels des Korbsegments erfolgt insbesondere beim Dreschen im Dreschwerk und/oder beim Abscheiden in der Abscheidevorrichtung.

Das Korbsegment erstreckt sich bogenförmig um eine fiktive Korbachse in eine axiale Richtung. Dabei kann es die Korbachse vollständig oder teilweise zylindrisch oder elliptisch umschließen. Die Bogenform des Korbsegments ist bevorzugt kreisförmig oder oval ausgebildet. Bevorzugt sind die mehreren Fingerleisten im Korbsegment in Umfangsrichtung nebeneinander angeordnet. Dabei erstrecken sich die Finger der Fingerleisten in Umfangsrichtung bevorzugt geradlinig. Eine bogenförmige Krümmung, insbesondere in Umfangsrichtung, der Finger und/oder der Querleisten ist jedoch ebenfalls bevorzugt.

Bevorzugt sind die Fingerleisten als Formkörper, insbesondere einstückig, ausgebildet. Weiterhin bevorzugt bestehen die Fingerleisten im Wesentlichen aus einem verschleißfesten Stahl. Dabei werden sie vorzugsweise in einem Presshärteverfahren warm umgeformt und anschließend gehärtet. Die Finger und die Querleiste jeder Fingerleiste weisen dabei besonders bevorzugt eine im Wesentlichen homogene Materialstärke auf. Die Materialstärke ist die Materialdicke.

Das Korbsegment zeichnet sich dadurch aus, dass die Finger im Querschnitt bogenförmig ausgebildet sind und/oder die Querleisten in der Erstreckungsrichtung eine Wellenform aufweisen. Dadurch wird die Stabilität der Fingerleisten des Korbsegments erhöht.

Bei der im Querschnitt bogenförmigen Ausbildung weisen die Finger eine Außenwölbung und eine Innenwölbung auf. Bevorzugt sind beide Wölbungen der Korbachse zugewandt. Vorzugsweise weist die bogenförmige Ausbildung eine Krümmung parallel zur Erstreckungsrichtung auf.

Durch im Querschnitt bogenförmig ausgebildete Finger erhöht sich die Stabilität der Finger z.B. gegenüber flach ausgebildeten Fingern. Somit kann die Materialstärke und damit das Gewicht der Finger und damit des Korbsegments reduziert werden.

Zudem reduziert die Außenwölbung ein Ablagern und/oder ein Festsetzen von Erntegut in und/oder an den Fingern. Die Wölbung schont durch ihre abgerundete Form des Weiteren das Erntegut, wodurch ein Strohbruch reduziert und eine folgende Reinigung des Erntegutes in der Reinigungsvorrichtung vereinfacht wird.

Die Wellenform der Querleisten erhöht ebenfalls die Stabilität der Fingerleisten, zum Beispiel gegenüber eben ausgebildeten Querleisten. Dadurch kann ebenfalls die Materialstärke und damit das Gewicht reduziert werden.

Bevorzugt weist jede Querleiste eine Oberseite und eine Unterseite auf. Weiterhin bevorzugt ist dieselbe Wellenform auf der Oberseite und auf der Unterseite ausgebildet.
In einer bevorzugten Ausgestaltung weist die Oberseite jeder Querleiste in der Erstreckungsrichtung die Wellenform auf. Dabei ist die Oberseite vorzugsweise der Korbachse zugewandt.

Vorzugsweise sind die Finger benachbarter Fingerleisten in axialer Richtung zueinander versetzt angeordnet. Der Versatz der Finger benachbarter Leisten zueinander ist bevorzugt derart ausgestaltet, dass die Finger jeweils einer Fingerleiste fluchtend mit den Spaltöffnungen der jeweils in und gegen die Umfangsrichtung benachbarten Fingerleisten angeordnet sind.

Weiterhin bevorzugt weist die Wellenform der Querleisten Wellentäler und Wellenberge auf. Vorzugsweise sind die Finger der Fingerleisten fluchtend mit den Wellentälern der benachbarten Fingerleisten angeordnet. Die Wellenberge sind zudem vorzugsweise fluchtend mit den Fingern derselben Fingerleiste angeordnet. Die Wellenberge wirken dabei als exponierte Prallflächen für vorbeigefördertes Erntegut. Dadurch wird die Abscheidung des Erntegutes verbessert.

Die Wellentäler befinden sich zwischen den Wellenbergen und sind bevorzugt fluchtend mit Spaltöffnungen derselben Fingerleiste angeordnet. Die Wellentäler reduzieren das Festsetzen von Erntegut an Durchtrittsöffnungen des Korbsegmentes. Da die Oberseite der Querleisten in den Wellentälern vorzugsweise abgesenkt ist, wird eine Aufprallfläche für das Erntegut dort reduziert.

Die Wellenberge und/oder Wellentäler erstrecken sich auf der Oberseite der Querleisten vorzugsweise jeweils von den Fingern bis oder über eine erste den Fingern abgewandte Kante auf der Oberseite der Querleisten. Vorzugsweise sind die Wellenberge Verlängerungen der Wölbungen der Finger. Die Wellenberge und Wellentäler sind zudem vorzugsweise abgerundet, insbesondere in und gegen die Erstreckungsrichtung, wodurch ebenfalls der Strohbruch reduziert und die weitere Reinigung des Erntegutes vereinfacht wird.

Alternativ zur Wellenform ist es denkbar, dass die die Oberseite der Querleisten abwechselnd konkave und/oder konvexe Abschnitte aufweist, wodurch die Abscheidung des Erntegutes ebenfalls verbessert wird.

In einer bevorzugten Ausgestaltung weisen die Finger jeweils ein offenes Ende auf. Weiterhin bevorzugt sind sie parallel zueinander. Dabei erstrecken sich die Finger vorzugsweise jeweils von der Querleiste aus zu ihrem offenen Ende. Dadurch wird ein Festsetzen von Erntegut, insbesondere Stroh, zwischen den Fingern der Fingerleisten und der Querleiste der in Umfangsrichtung benachbarten Fingerleiste, und an oder in den Durchtrittsöffnungen des Korbsegmentes reduziert. Vorzugsweise ist das offene Ende bevorzugt abgerundet ausgestaltet. Alternativ kann es auch kantig ausgestaltet sein.

In einer weiteren bevorzugten Ausgestaltungsform ist das offene Ende der Finger der Fingerleisten jeweils von der Querleiste ihrer in Umfangsrichtung benachbarten Fingerleiste beabstandet. Dadurch entsteht eine Lücke zwischen den Fingern und der Querleiste zweier benachbarter Fingerleisten, die die Durchtrittsöffnung vergrößert und einen Durchtritt des Erntegutes durch das Korbsegment verbessert. Zudem wird das Festsetzen von Erntegut an den Durchtrittsöffnungen des Korbsegmentes reduziert.

Die Querleisten umfassen jeweils einen ersten und einen zweiten Schenkel.

Beide Schenkel sind bevorzugt in einem Winkel >0°, insbesondere in einem Winkel von 90°, zueinander angeordnet. Dabei weist der zweite Schenkel vorzugsweise die Oberseite der Querleisten auf. Die Finger erstrecken sich bevorzugt von dem zweiten Schenkel aus zu offenen Enden. Durch die über einen Winkel, insbesondere einen Winkel von 90°, verbundenen Schenkel wird die Stabilität der Querleisten und der Fingerleisten weiter erhöht. Durch die geringere Materialstärke aufgrund der bogenförmigen Ausbildung der Finger und/oder der Wellenform der Querleisten kann zudem ein Biegeradius zwischen den beiden Schenkeln der Querleisten reduziert werden, wodurch die Wellenberge der Wellenform scharfkantiger werden. Dadurch wird die Abscheidung des Erntegutes weiter verbessert. Bevorzugt weist das Korbsegment einen Rahmen auf, an dem die Fingerleisten angeordnet sind. Dabei sind die Fingerleisten vorzugsweise jeweils mittels des ersten Schenkels am Rahmen befestigt. Durch Verwendung eines Rahmens wird die Stabilität des Korbsegmentes erhöht. Der Rahmen kann zudem an der Ausbildung der Durchtrittsöffnungen beteiligt sein.

Bevorzugt verläuft der Rahmen bogenförmig entlang der Umfangsrichtung. Durch Befestigung der Fingerleisten am Rahmen mittels des ersten Schenkels werden sie kostengünstig und stabil befestigt. Sie werden zudem bevorzugt ortsfest am Rahmen befestigt, insbesondere angeschweißt oder geschraubt.

Alternativ zur ortsfesten Befestigung ist es bevorzugt, dass die Fingerleisten jeweils um Schwenkachsen reversibel verschwenkbar sind. Dabei erstrecken sich Schwenkachsen vorzugsweise parallel zu den Querleisten. Hierdurch kann ein Anstellwinkel der Fingerleisten und der Finger eingestellt werden. Dadurch können die Größe der Durchtrittsöffnungen und/oder ein Aufprallwinkel des Erntegutes auf die Fingerleisten an eine Erntegutart, Ernteguteigenschaften und Maschinenparameter angepasst werden. Bevorzugt sind die Fingerleisten dazu mittels mindestens eines Aktors um ihre Schwenkachse verschwenkbar. Die Steuerung des mindestens einen Aktors kann manuell oder automatisch mittels einer Regel- und Steuereinrichtung erfolgen.

In einer bevorzugten Ausgestaltung umfasst ein Korb ein oder mehrere Korbsegmente, wobei der Korb ein Dreschkorb mit einem Korbsegment für ein tangentiales Dreschwerk für Tangentialmähdrescher und/oder Hybridmähdrescher, und/oder ein Abscheidekorb mit mehreren Korbsegmenten für eine axiale Abscheidevorrichtung für Hybridmähdrescher, und/oder ein Abscheidekorb mit mehreren Korbsegmenten für eine axiale Abscheidevorrichtung für Axialmähdrescher ist. Dadurch wird die Stabilität des Korbes bei gleichem Gewicht erhöht.

Vorzugsweise umfasst die axiale Abscheidevorrichtung für Axialmähdrescher einen Dreschabschnitt und einen Abscheideabschnitt.

Der Korb, insbesondere der Dreschkorb oder der Abscheidekorb, ist bevorzugt teilumfänglich, insbesondere zylindrisch oder elliptisch, um die Dreschtrommel oder den Abscheiderotor ausgebildet. Bevorzugt ist der Korb zudem unterhalb der Dreschtrommel oder des Abscheiderotors angeordnet. Vorzugsweise ist der Abscheidekorb ein unterer Teil eines Gehäuses, das den Abscheiderotor der Abscheidevorrichtung vollumfänglich zylindrisch oder elliptisch umschließt.

Besonders bevorzugt sind die mehreren Korbsegmente in Umfangsrichtung nebeneinander und/oder in axialer Richtung hintereinander angeordnet. Dadurch kann der Korb auf einfache Weise ausgetauscht werden. Des Weiteren ist der Korb dadurch modular aus gleichen oder verschiedenen Korbsegmenten zusammensetzbar. Zudem kann eine Korblänge und/oder eine Korbbreite angepasst werden, ohne die Maße des Korbsegments zu verändern.

Die Aufgabe wird weiterhin gelöst mit einem Mähdrescher mit mindestens einem solchem Korbsegment. Dadurch werden das Gewicht und die Kosten des Mähdreschers reduziert. Der Mähdrescher ist bevorzugt als ein Tangentialfluss-Mähdrescher, ein Tangential-Axialfluss-Hybridmähdrescher oder ein Axialfluss-Mähdrescher ausgebildet. Weiterhin bevorzugt ist der Mähdrescher ein selbstfahrender Mähdrescher.

Vorzugsweise ist das Korbsegment ein Bestandteil des Dreschkorbes des Dreschwerkes und/oder des Abscheidekorbes der Abscheidevorrichtung. Die Abscheidevorrichtung kann eine oder mehrere Untereinheiten aufweisen, die jeweils einen axialen Abscheiderotor und ein Gehäuse mit einem Abscheidekorb umfassen.

Die vorliegende Erfindung wird nachstehend anhand von in den Zeichnungen dargestellten Ausführungsbeispielen näher erläutert. Es zeigen:
- Fig. 1: eine schematisch Seitenansicht eines Mähdreschers mit einer axialen Abscheidevorrichtung;
- Fig. 2: ein Korbsegment und zwar in (a) in einer ersten Ausführungsform in einer perspektivische Ansicht und in (b) in einer zweiten Ausführungsform in einer Ansicht von oben;
- Fig. 3: in (a) und (b) perspektivische Ansichten einer Fingerleiste.

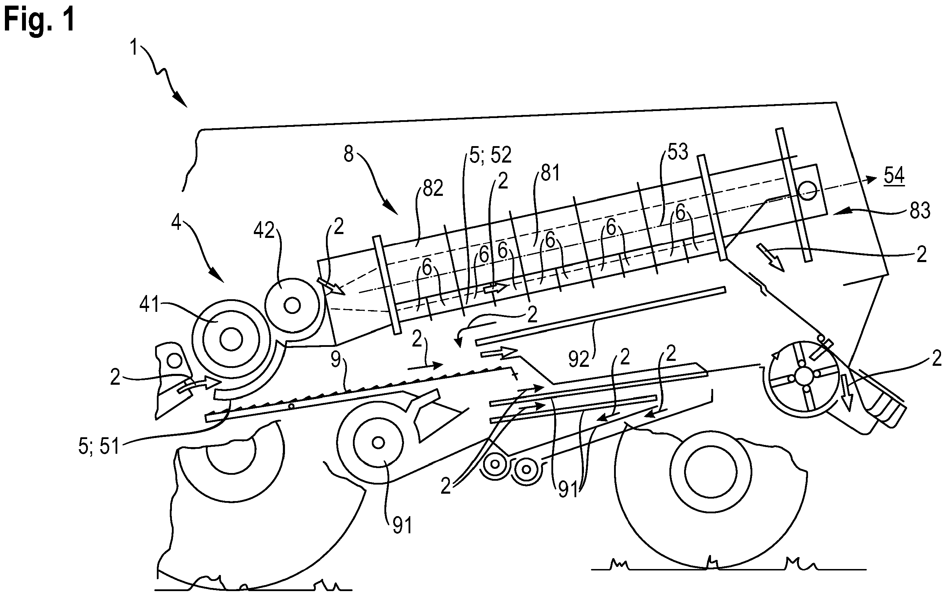

Figur 1 zeigt schematisch eine Seitenansicht eines Teilausschnittes eines an sich bekannten selbstfahrenden Mähdreschers 1 mit einer axialen Abscheidevorrichtung 8. Dargestellt ist hier ein Hybridmähdrescher.

Erntegut 2 wird während einer Erntefahrt mit einem Vorsatzgerät (nicht dargestellt) des Mähdreschers 1 abgeschnitten und mittels eines Schrägförderers (nicht dargestellt) einem Dreschwerk 4, hier einem tangentialen Dreschwerk 4, zugeführt.

Das Dreschwerk 4 umfasst eine Dreschtrommel 41, eine Strohwendetrommel 42 und einen als Dreschkorb 51 ausgeführten Korb 5. Der Dreschkorb 51 umschließt hier die Dreschtrommel 41 teilumfänglich unterhalb dieser. Er besteht aus einem oder mehreren erfindungsgemäßen, noch näher zu beschreibenden Korbsegmenten 6. Zusätzlich kann das Dreschwerk 4 eine Beschleunigungstrommel (nicht dargestellt) umfassen, wobei der Dreschkorb 51 dann ebenfalls die Beschleunigungstrommel teilumfänglich umschließen kann. Die Dreschtrommel 41 drischt das Erntegut 2 an dem Dreschkorb 51 aus. Das überwiegend aus Körnern bestehende am Dreschkorb 51 abgeschiedene Erntegut 2 fällt durch das mindestens eine Korbsegment 6 auf den Vorbereitungsboden 9, von wo es einer Reinigungsvorrichtungen 91 zugeführt wird. Das verbleibende im Wesentlichen aus Stroh, Spreu und Restkorn bestehende Erntegute 2 wird mittels der Strohwendetrommel 42 einer axialen Abscheidevorrichtung 8 zugeführt.

Die axiale Abscheidevorrichtung 8 umfasst einen Abscheiderotor 81 und ein den Abscheiderotor 81 zylindrisch und vollumfänglich umschließendes Gehäuse 82. Das Gehäuse 82 weist einen unteren Gehäuseteil 83 auf, der einen als Abscheidekorb 52 ausgebildeten Korb 5 umfasst. Der Korb 5 umschließt den Abscheiderotor 81 zylindrisch und teilumfänglich, und weist eine fiktive Korbachse 53 auf. Der Korb 5 umfasst mehrere Korbsegmente 6, welche in einer axialen Richtung 54 hintereinander angeordnet sind.

Der Abscheiderotor 81 nimmt das Erntegut 2 auf und fördert es auf einer schraubenlinienförmigen Bahn (nicht dargestellt) um die Korbachse 53 durch das Gehäuse 82 der Abscheidevorrichtung 8. Dabei wird Erntegut 2, im Wesentlichen bestehend aus Restkörnern, Spreu und Stroh, am Abscheidekorb 52 abgeschieden. Die Restkörner und die Spreu des Erntegutes 2 fallen durch die Korbsegmente 6 auf einen Rücklaufboden 92. Von dort aus wird das Erntegut 2 über den Vorbereitungsboden 9 der Reinigungsvorrichtung 91 zugeführt.

Das im Wesentlichen aus Stroh bestehende Erntegut 2, das in der axialen Abscheidevorrichtung 8 verblieben ist, wird in axialer Richtung 54 aus der axialen Abscheidevorrichtung 8 herausgefördert und schließlich hinten am Mähdrescher 1 ausgeworfen.

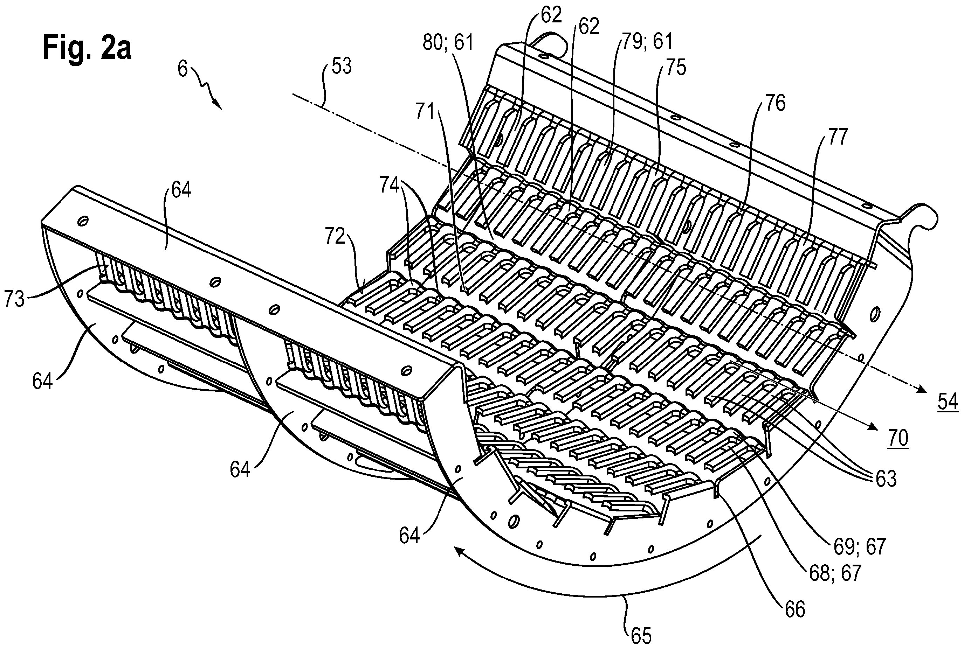

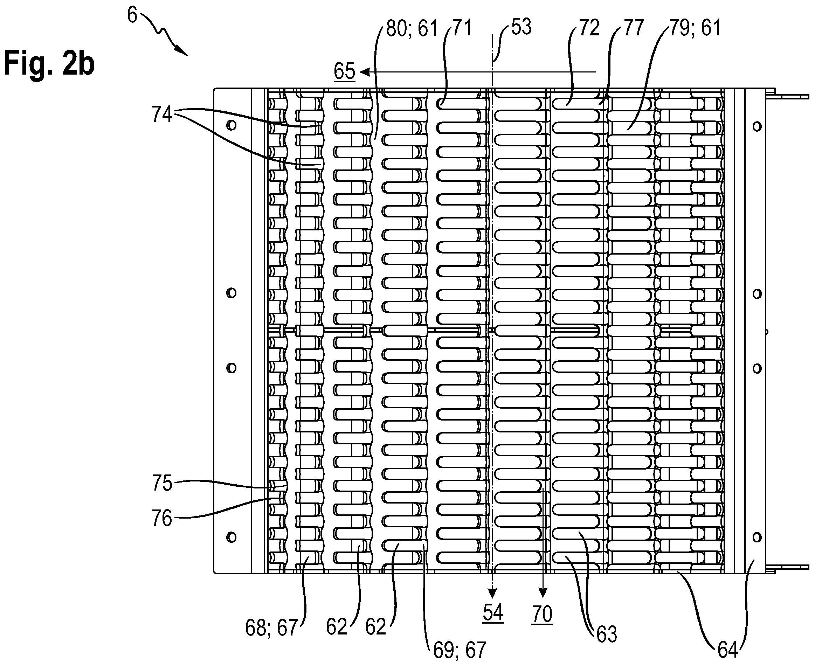

Die Figuren 2 (a) und (b) zeigen zwei Ausführungsformen des erfindungsgemäßen Korbsegments 6 des als Abscheidekorb 52 ausgestalteten Korbes 5. Figur 2 (a) eine perspektivische Ansicht des Korbsegments 6 mit Fingerleisten 62 mit flach-endenden offenen Enden 71 von Fingern 63. Figur 2 (b) zeigt eine Ansicht des Korbsegments 6 von oben mit Fingerleisten 62 mit abgerundeten offenen Enden 71 von Fingern 63. Das Korbsegment 6 erstreckt sich bogenförmig, hier kreisförmig, um eine fiktive Korbachse 53 mit einer axialen Richtung 54. Die Korbachse 53 ist dabei nur teilumfänglich umschlossen.

Das Korbsegment 6 weist einen bogenförmigen Rahmen 64 auf, an dem die Fingerleisten 62 in Umfangsrichtung 65 des Korbsegmentes 6 angeordnet sind. Dazu sind die Fingerleisten 62 in Nuten 66 des Rahmens 64 befestigt, insbesondere angeschweißt.

Die Fingerleisten 62 bilden Durchtrittsöffnungen 61 der Korbsegmente 6. Die Fingerleisten 62 weisen zudem jeweils eine Oberseite 77 auf, die der Korbachse 53 zugewandt ist. Die Fingerleisten 62 umfassen jeweils eine Querleiste 67, die sich in einer Erstreckungsrichtung 70 parallel zur Korbachse 53 erstreckt. An den Querleisten 67 sind die Finger 63 angeordnet, die sich jeweils von den Querleisten 67 aus zu dem offenen Ende 71 erstrecken. Zwischen den einzelnen Fingern 63 jeder Fingerleiste 62 erstrecken sich Spaltöffnungen 79.

Die Finger 63 von in Umfangsrichtung 65 benachbarten Fingerleisten 62 sind zueinander in axialer Richtung 54 versetzt angeordnet. Dabei sind die Finger 63 der Fingerleisten 62 fluchtend mit den Spaltöffnungen 79 der in und gegen die Umfangsrichtung 65 benachbarten Fingerleisten 62 angeordnet. Des Weiteren sind die Finger 63 parallel zueinander beabstandet. Dabei sind sie im Wesentlichen in Umfangsrichtung 65 ausgerichtet. Die offenen Enden 71 der Finger 62 der Fingerleisten 62 sind jeweils von der Querleiste 67 ihrer in Umfangsrichtung 65 benachbarten Fingerleiste 62 beabstandet, wodurch eine Lücke 80 zwischen den Fingerleisten 62 vorliegt. Die Lücke 80 bildet zusammen mit den Spaltöffnungen 79 die Durchtrittsöffnungen 61.

Jeder Finger 63 ist bogenförmig ausgebildet und weist somit eine Krümmung mit einer Außenwölbung 72 und einer Innenwölbung 73 auf. Beide Wölbungen 72,73 sind der Korbachse 53 zugewandt. Dabei befindet sich die Außenwölbung 72 auf einer der Korbachse 5 zugewandten Seite der Finger 63 und die Innenwölbung 73 auf einer der Korbachse 5 abgewandten Seite der Finger 63.

Jede Querleiste 67 weist einen ersten und einen zweiten Schenkel 68,69 auf. Die Querleisten 67 sind jeweils mittels des ersten Schenkels 68 in den Nuten 66 des Rahmens 64 befestigt. Am zweiten Schenkel 69 der Querleisten 67 sind die Finger 63 angeordnet. Sie erstrecken sich jeweils vom zweiten Schenkel 69 aus zu einem offenen Ende 71.

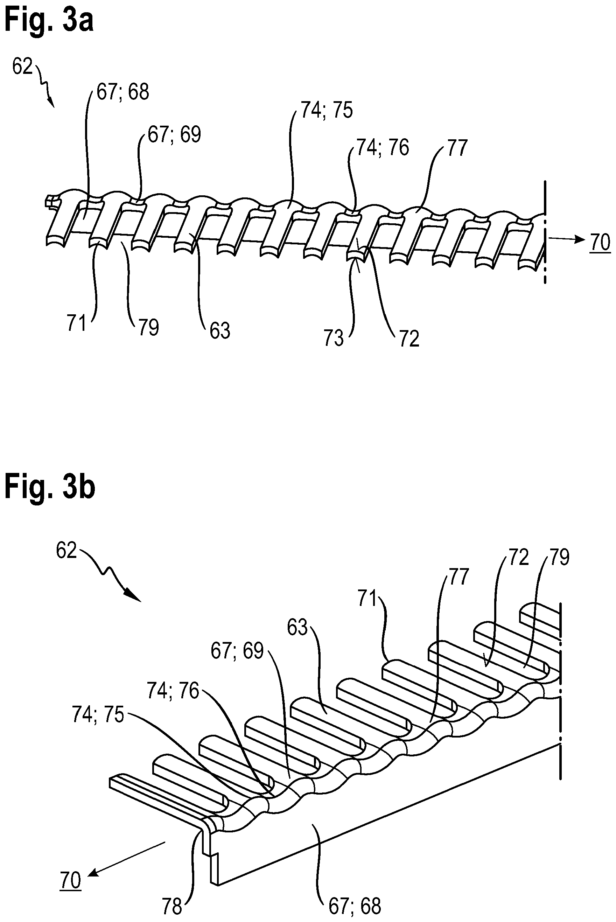

Die Figuren 3 (a) und (b) zeigen perspektivische Ansichten einen Ausschnitts einer Fingerleiste 62. Die beiden Schenkel 68,69 der Querleisten 67 sind in einem Winkel von 90° miteinander verbunden und weisen eine Biegeradius 78 zwischen sich auf. Die Finger 63 sind am zweiten Schenkel 69 der Querleisten 67 angeordnet und erstrecken sich jeweils zu einem offenen Ende 71. Im hier gezeigten ist das offene Ende 71 der jeweiligen Finger 63 jeweils flach endend dargestellt. Insbesondere dient dieses Ausführungsbeispiel hier, wie auch in der Figuren 2 (a), einer besseren zeichnerischen Darstellung der Außen- und Innenwölbung 72,73 der Finger 63. Bevorzugt ist jedoch die Ausgestaltungsform mit abgerundete offene Ende 71 der jeweiligen Finger 63, wie in Fig. 2 (b) dargestellt.

Der zweite Schenkel 69 der Querleisten 67 weist eine Wellenform 74 auf, die sich entlang der Erstreckungsrichtung 70 erstreckt. Er weist zudem dieselbe Wellenform 74 auf der Oberseite 77 und einer Unterseite des zweiten Schenkels 69 der Querleisten 67 auf. Die Wellenform 74 weist Wellenberge 75 und Wellentäler 76 auf. Sie befinden sich auf der Oberseite 77 des zweiten Schenkels 69 der Querleisten 67. Dabei ist die Oberseite 77 der Korbachse zugewandt. Die Wellenberge 75 sind fluchtend mit den Fingern 63 angeordnet. Die Wellenberge 75 sind zudem im Wesentlichen eine Verlängerung der Außenwölbung 72 der Finger 63. Die Wellentäler 76 sind fluchtend mit den Spaltöffnungen 79 derselben Fingerleiste 62 angeordnet. Die Wellentäler 76 sind zudem zwischen den Fingern 63 angeordnet.

Beim Abscheiden des Erntegutes 2 in der axialen Abscheidevorrichtung 8 wird das Erntegut 2, das vorwiegend aus Restkörnern, Spreu und insbesondere Stroh besteht, mittels des Abscheiderotors 81 an den Korbsegmenten 6 des Korbes 5 in Umfangsrichtung 65 vorbeigefördert. Aufgrund der bogenförmigen Ausbildung der Finger 63, insbesondere ihrer Außenwölbung 72, und aufgrund der Spaltöffnungen 79 vor den Wellenbergen 75 der Querleisten 67, wird das Erntegut 2 dabei insbesondere auf die Wellenberge 75 der Querleisten 67 ausgerichtet und gefördert. Eine Abscheidung des Erntegutes 2 erfolgt insbesondere beim Aufprall des Erntegutes 2 auf die Wellenberge 75. Das überwiegend aus Körnern und Spreu bestehende abgeschiedene Erntegut 2 fällt durch die Durchtrittsöffnungen 61 des mindestens einen Korbsegments 6.

**Bezugszeichenliste**

| | | | |
|---|---|---|---|
| 1 | Mähdrescher | 91 | Reinigungsvorrichtung |
| 2 | Erntegut | 92 | Rücklaufboden |
| 4 | Dreschwerk | | |
| 41 | Dreschtrommel | | |
| 42 | Strohwendetrommel | | |
| 5 | Korb | | |
| 51 | Dreschkorb | | |
| 52 | Abscheidekorb | | |
| 53 | Korbachse | | |
| 54 | Axiale Richtung | | |
| 6 | Korbsegment | | |
| 61 | Durchtrittsöffnung | | |
| 62 | Fingerleiste | | |
| 63 | Finger | | |
| 64 | Rahmen | | |
| 65 | Umfangsrichtung | | |
| 66 | Nut | | |
| 67 | Querleiste | | |
| 68 | Erster Schenkel | | |
| 69 | Zweiter Schenkel | | |
| 70 | Erstreckungsrichtung | | |
| 71 | Offenes Ende der Finger | | |
| 72 | Außenwölbung | | |
| 73 | Innenwölbung | | |
| 74 | Wellenform | | |
| 75 | Wellenberg | | |
| 76 | Wellental | | |
| 77 | Oberseite | | |
| 78 | Biegeradius | | |
| 79 | Spaltöffnung | | |
| 80 | Lücke | | |
| 8 | Axiale Abscheidevorrichtung | | |
| 81 | Abscheiderotor | | |
| 82 83 | Gehäuse Unterer Gehäuseteil | | |
| 9 | Vorbereitungsboden | | |

## Patentansprüche

1. Korbsegment (6) für einen Mähdrescher (1), das zum Abscheiden von Erntegut (2) vorgesehen ist, sich in eine Umfangsrichtung (65) bogenförmig um eine Korbachse (53) erstreckt, und mehrere Fingerleisten (62) umfasst, wobei die Fingerleisten (62) jeweils eine Querleiste (67) aufweisen, wobei sich die Querleisten (67) jeweils in einer Erstreckungsrichtung (70) parallel zur Korbachse (53) erstrecken, wobei jede Querleiste (67) einen ersten und einen zweiten Schenkel (68, 69) aufweist, und wobei am zweiten Schenkel (69) der Querleisten (67) jeweils mehrere Finger (63) angeordnet sind,
**dadurch gekennzeichnet, dass**
der zweite Schenkel (69) der Querleisten (67) in der Erstreckungsrichtung (70) eine Wellenform (74) aufweist, und die Finger (63) im Querschnitt bogenförmig ausgebildet sind, wobei die im Querschnitt bogenförmig ausgebildeten Finger (63) eine Außenwölbung (72) und eine Innenwölbung (73) aufweisen.

2. Korbsegment (6) nach Anspruch 1,
**dadurch gekennzeichnet, dass**
die Querleisten (67) jeweils eine Oberseite (77) aufweisen und die Oberseite (77) in der Erstreckungsrichtung (70) die Wellenform (74) aufweist, wobei die Oberseite (77) der Korbachse (53) zugewandt ist.

3. Korbsegment (6) nach einem der vorhergehenden Ansprüche,
**dadurch gekennzeichnet, dass**
die Finger (63) benachbarter Fingerleisten (62) in axialer Richtung (54) zueinander versetzt angeordnet sind.

4. Korbsegment (6) nach einem der vorhergehenden Ansprüche,
**dadurch gekennzeichnet, dass**
die Wellenform (74) der Querleisten (67) Wellentäler (76) und Wellenberge (75) aufweist, und die Finger (63) der Fingerleisten (62) fluchtend mit den Wellentälern (76) der benachbarten Fingerleisten (62) angeordnet sind.

5. Korbsegment (6) nach einem der vorhergehenden Ansprüche,
**dadurch gekennzeichnet, dass**
die Finger (63) jeweils ein offenes Ende (71) aufweisen und parallel zueinander sind.

6. Korbsegment (6) nach nach Anspruch 5,
**dadurch gekennzeichnet, dass**
das offene Ende (71) der Finger (63) der Fingerleisten (62) jeweils von der Querleiste (67) ihrer in Umfangsrichtung (65) benachbarten Fingerleiste (62) beabstandet ist.

7. Korbsegment (6) nach einem der vorhergehenden Ansprüche,
**dadurch gekennzeichnet, dass**
die ersten und zweiten Schenkel (68,69) der Querleisten (67) in einem Winkel >0°, insbesondere in einem Winkel von 90°, zueinander angeordnet sind, wobei der zweite Schenkel (69) die Oberseite (77) der Querleisten (67) aufweist und sich die Finger (63) von dem zweiten Schenkel (69) aus zu den offenen Enden (71) erstrecken.

8. Korbsegment (6) nach einem der vorhergehenden Ansprüche,
**dadurch gekennzeichnet, dass**
das Korbsegment (6) einen Rahmen (64) aufweist, an dem die Fingerleisten (62) angeordnet sind, wobei die Fingerleisten (62) mittels des ersten Schenkels (68) am Rahmen (64) befestigt sind.

9. Korbsegment (6) nach einem der vorhergehenden Ansprüche,
**dadurch gekennzeichnet, dass**
die Fingerleisten (62) jeweils um Schwenkachsen, die sich parallel zu den Querleisten (67) erstrecken, reversibel verschwenkbar sind.

10. Korb (5) mit einem oder mehreren Korbsegmenten (6) nach einem der Ansprüche 1 bis 9, **dadurch gekennzeichnet, dass**
der Korb (5) ein Dreschkorb (51) mit einem Korbsegment (6) für ein tangentiales Dreschwerk (4) für Tangentialmähdrescher und/oder Hybridmähdrescher, und/oder ein Abscheidekorb (52) mit mehreren Korbsegmenten (6) für eine axiale Abscheidevorrichtung (8) für Hybridmähdrescher, und/oder ein Abscheidekorb (52) mit mehreren Korbsegmenten (6) für eine axiale Abscheidevorrichtung (8) für Axialmähdrescher ist.

11. Korb (5) nach Anspruch 10,
**dadurch gekennzeichnet, dass**
mehrere Korbsegmente (6) in Umfangsrichtung (65) nebeneinander und/oder in axialer Richtung (54) hintereinander angeordnet sind.

12. Mähdrescher (1) mit mindestens einem Korbsegment (6) nach einem der Ansprüche 1 bis 9.

## Claims

1. A concave segment (6) for a combine harvester (1) provided for separating crop material (2) extending in a peripheral direction (65) in an arc about a concave axis (53) and including a plurality of finger bars (62), wherein the finger bars (62) respectively have a transverse bar (67), wherein the transverse bars (67) respectively extend in a direction of extension (70) parallel to the concave axis (53), wherein each transverse bar (67) has a first and a second limb (68, 69), and wherein a plurality of fingers (63) are respectively arranged at the second limb (69) of the transverse bars (67),
**characterised in that**
the second limb (69) of the transverse bars (67) is of a wave shape (74) in the direction of extension (70), and the fingers (63) are of an arcuate configuration in cross-section, wherein the fingers (63) which are of an arcuate configuration in cross-section have an outer curvature (72) and an inner curvature (73).

2. A concave segment (6) according to claim 1
**characterised in that**
the transverse bars (67) respectively have a top side (77) and the top side (77) is of the wave shape (74) in the direction of extension (70), the top side (77) facing towards the concave axis (53).

3. A concave segment (6) according to one of the preceding claims
**characterised in that**
the fingers (63) of adjacent finger bars (62) are arranged in mutually displaced relationship in the axial direction (54).

4. A concave segment (6) according to one of the preceding claims
**characterised in that**
the wave shape (74) of the transverse bars (67) has wave troughs (76) and wave peaks (75) and the fingers (63) of the finger bars (62) are arranged aligned with the wave troughs (77) of the adjacent finger bars (62).

5. A concave segment (6) according to one of the preceding claims
**characterised in that**
the fingers (63) respectively have an open end (71) and are arranged parallel to each other.

6. A concave segment (6) according to claim 5
**characterised in that**
the open end (71) of the fingers (63) of the finger bars (62) are respectively spaced from the transverse bar (67) of its finger bar (62) adjacent in the peripheral direction (65).

7. A concave segment (6) according to one of the preceding claims
**characterised in that**
the first and second limbs (68, 69) of the transverse bars (67) are arranged at an angle >0°, in particular at an angle of 90°, relative to each other, wherein the second limb (69) has the top side (77) of the transverse bars (67) and the fingers (63) extend from the second limb (69) to the open ends (71).

8. A concave segment (6) according to one of the preceding claims
**characterised in that**
the concave segment (6) has a frame (64) on which the finger bars (62) are arranged, wherein the finger bars (62) are fixed by means of the second limb (68) to the frame (64).

9. A concave segment (6) according to one of the preceding claims
**characterised in that**
the finger bars (62) are respectively reversibly pivotable about pivot axes extending parallel to the transverse bars (67).

10. A concave (5) comprising one or more concave segments (6) according to one of claims 1 to 9 **characterised in that**
the concave (5) is a threshing concave (51) having a concave segment (6) for a tangential threshing mechanism (4) for tangential combine harvesters and/or hybrid combine harvesters and/or a separating concave (52) having a plurality of concave segments (6) for an axial separating apparatus (8) for hybrid combine harvesters and/or a separating concave (52) having a plurality of concave segments (6) for an axial separating apparatus (8) for axial combine harvesters.

11. A concave (5) according to claim 10
**characterised in that**
a plurality of concave segments (6) are arranged in mutually juxtaposed relationship in the peripheral direction (65) and/or in successive relationship in the axial direction (54).

12. A combine harvester (1) comprising an least one concave segment (6) according to one of claims 1 to 9.

## Revendications

1. Segment de contre-batteur (6) pour une moissonneuse-batteuse (1), lequel est prévu pour séparer du produit récolté (2), s'étend dans une direction circonférentielle (65) sous forme arquée autour d'un axe de contre-batteur (53) et inclut plusieurs barres de doigts (62), les barres de doigts (62) comportant respectivement une barre transversale (67), les barres transversales (67) s'étendant respectivement dans une direction d'extension (70) parallèle à l'axe de contre-batteur (53), chaque barre transversale (67) comportant une première et une seconde branche (68, 69), et sur la seconde branche (69) des barres transversales (67) étant disposés respectivement plusieurs doigts (63), **caractérisé en ce que** la seconde branche (69) des barres transversales (67) présente dans la direction d'extension (70) une forme ondulée (74), et les doigts (63) étant conçus sous forme arquée en section transversale, les doigts (63) conçus sous forme arquée en section transversale présentant une courbure extérieure (72) et une courbure intérieure (73).

2. Segment de contre-batteur (6) selon la revendication 1, **caractérisé en ce que** les barres transversales (67) comportent respectivement un dessus (77), et le dessus (77) présentant dans la direction d'extension (70) la forme ondulée (74), le dessus (77) étant tourné vers l'axe de contre-batteur (53).

3. Segment de contre-batteur (6) selon une des revendications précédentes, **caractérisé en ce que** les doigts (63) de barres de doigts voisines (62) sont disposés avec un décalage les uns par rapport aux autres dans la direction axiale (54).

4. Segment de contre-batteur (6) selon une des revendications précédentes, **caractérisé en ce que** la forme ondulée (74) des barres transversales (67) comporte des creux d'ondulation (76) et des sommets d'ondulation (75), et les doigts (63) des barres de doigts (62) sont disposés dans l'alignement des creux d'ondulation (76) des barres de doigts voisines (62).

5. Segment de contre-batteur (6) selon une des revendications précédentes, **caractérisé en ce que** les doigts (63) comportent respectivement une extrémité ouverte (71) et sont parallèles les uns aux autres.

6. Segment de contre-batteur (6) selon la revendication 5, **caractérisé en ce que** l'extrémité ouverte (71) des doigts (63) des barres de doigts (62) est respectivement distante de la barre transversale (67) de leur barre de doigts (62) voisine dans la direction circonférentielle (65).

7. Segment de contre-batteur (6) selon une des revendications précédentes, **caractérisé en ce que** les première et seconde branches (68, 69) des barres transversales (67) sont disposées selon un angle > 0°, en particulier selon un angle de 90°, l'une par rapport à l'autre, la seconde branche (69) comportant le dessus (77) des barres transversales (67), et les doigts (63) s'étendant depuis la seconde branche (69) vers les extrémités ouvertes (71).

8. Segment de contre-batteur (6) selon une des revendications précédentes, **caractérisé en ce que** le segment de contre-batteur (6) comprend un cadre (64) sur lequel sont disposées les barres de doigts (62), les barres de doigts (62) étant fixées au cadre (64) au moyen de la première branche (68).

9. Segment de contre-batteur (6) selon une des revendications précédentes, **caractérisé en ce que** les barres de doigts (62) sont respectivement pivotantes de manière réversible autour d'axes de pivotement qui s'étendent parallèlement aux barres transversales (67).

10. Contre-batteur (5) comprenant un ou plusieurs segments de contre-batteur (6) selon une des revendications 1 à 9, **caractérisé en ce que** le contre-batteur (5) est un contre-batteur de battage (51) comprenant un segment de contre-batteur (6) pour un système de battage tangentiel (4) pour des moissonneuses-batteuses tangentielles et/ou des moissonneuses-batteuses hybrides, et/ou une corbeille de séparation (52) comprenant plusieurs segments de contre-batteur (6) pour un dispositif séparateur axial (8) pour des moissonneuses-batteuses hybrides, et/ou une corbeille de séparation (52) comprenant plusieurs segments de contre-batteur (6) pour un dispositif séparateur axial (8) pour des moissonneuses-batteuses axiales.

11. Contre-batteur (5) selon la revendication 10, **caractérisé en ce que** plusieurs segments de contre-batteur (6) sont disposés dans la direction circonférentielle (65) les uns à côté des autres et/ou dans la direction axiale (54) les uns derrière les autres.

12. Moissonneuse-batteuse (1) comprenant au moins un segment de contre-batteur (6) selon une des revendications 1 à 9.
